Europäisches Patentamt

European Patent Office

Office européen des brevets

(11) Veröffentlichungsnummer: **0 006 131**
**A1**

## EUROPÄISCHE PATENTANMELDUNG

(21) Anmeldenummer: 79101479.8

(22) Anmeldetag: 15.05.79

(51) Int. Cl.³: **H 04 N 1/00, G 06 F 3/14**

(30) Priorität: 13.06.78 DE 2825912

(43) Veröffentlichungstag der Anmeldung: 09.01.80 Patentblatt 80/1

(84) Benannte Vertragsstaaten: **DE FR GB NL SE**

(71) Anmelder: **SIEMENS AKTIENGESELLSCHAFT Berlin und München, Postfach 261, D-8000 München 22 (DE)**

(72) Erfinder: **Klein, Peter, Dipl.-Ing., Possenhofener Strasse 14, D-8133 Feldafing (DE)**

(54) **Verfahren zur Übertragung von Aufzeichnungen mit gemischtem Darstellungsinhalt auf einen Sichtanzeigeschirm, insbesondere in Fernsprechanlagen.**

(57) Zur Übertragung von Aufzeichnungen mit gemischtem Darstellungsinhalt von Text und Grafik sind bisher folgende Möglichkeiten bekannt:

a) Bildpunktmäßige Abtastung der Aufzeichnung und aufeinanderfolgende Übertragung der Bildpunktinformationen mit der Folge einer großen Informationsmenge bei großer Auflösung,

b) bildpunktmäßige Abtastung der Aufzeichnung und Zusammenfassung der aufeinanderfolgenden Bildpunkte einer Zeile gleichen Informationsinhaltes mit der Folge einer verringerten Informationsmenge bei hoher Auflösung (Lauflängencodierung) und

c) Unterteilung der Aufzeichnung in gleich große Rasterfelder mit je einem alphanumerischen Zeichen und Übertragung eines Codewortes je Zeichen entsprechend dem vorgegebenen Raster, wobei für Grafik ein Rasterfeld in sechs Teilfelder unterteilt und die Feldkombination ebenfalls durch ein Codewort gekennzeichnet wird, mit der Folge einer stark verringerten Informationsmenge bei geringer Auflösung.

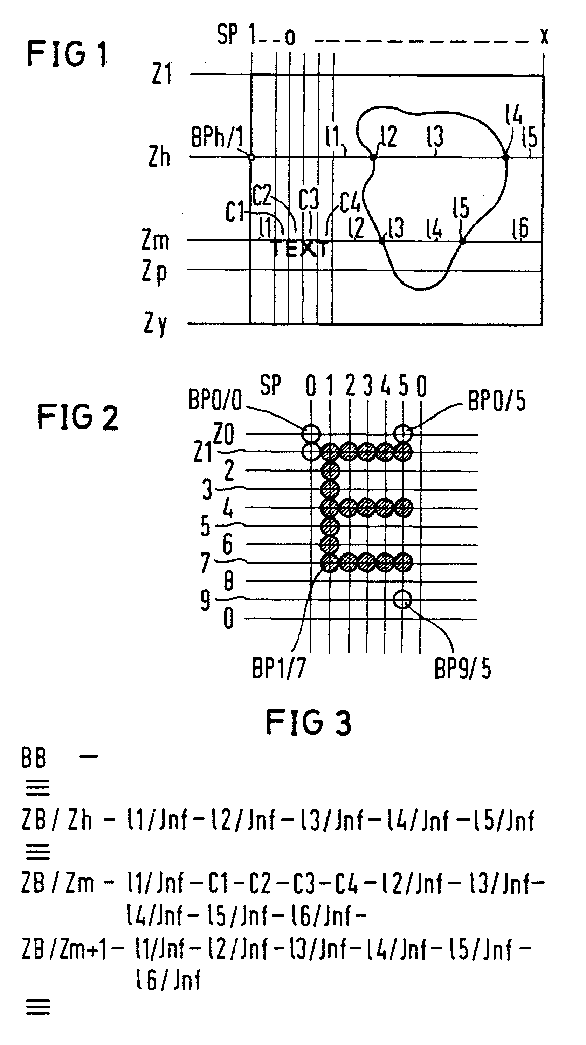

Die Erfindung sichert eine hohe Auflösung bei gegenüber der Lösung nach b) weiter verringerter Informationsmenge durch Lauflängencodierung (l...) der Grafik und Verwendung von Codewörtern (C...) für alphanumerische Zeichen, die lagegerecht in die Gesamtinformation einer Aufzeichnung eingefügt werden (Fig. 1).

Die neue Art der Übertragung ist besonders für Fernsprechleitungen geeignet, um im Rahmen einer zusätzlichen Datenübertragung auch Bildvorlagen zu einer Empfangsstelle zu übertragen.

0006131

- 1 -

SIEMENS AKTIENGESELLSCHAFT          Unser Zeichen:
Berlin und München                  VPA 78 P 6 1 0 8 EUR

Verfahren zur Übertragung von Aufzeichnungen mit gemischtem Darstellungsinhalt auf einen Sichtanzeigeschirm, insbesondere in Fernsprechanlagen.
--------------------------------------------------------

Die Erfindung betrifft ein Verfahren zur Übertragung von Aufzeichnungen mit gemischtem Darstellungsinhalt, z.B. Grafik und Text, auf einen aus einzelnen Bildpunkten zusammengesetzten Sichtanzeigeschirm, z.B. Kathodenstrahlröhre, wobei die Bildpunkte Zeile für Zeile angesteuert und entsprechend der abzubildenden Aufzeichnung ausgesteuert werden, so daß ein stehendes Bild entsteht, wobei die durch Abtastung der Aufzeichnung nach demselben Muster gewonnenen Bildpunktinformationen in der Weise zusammengefaßt werden, daß die Bildpunkte jeder Zeile in Gruppen aufeinanderfolgender Bildpunkte gleichen Informationsinhaltes, z.B. Hell oder Dunkel, unterteilt und je Zeile Informationen über die Größe der aufeinanderfolgenden Gruppen sowie den zugehörigen Informationsinhalt in digitaler Form gebildet werden, die als solche direkt oder nach Zwischenspeicherung zur Empfangsstelle übertragen,

Kt 1 Stl / 13.6.1978

0006131

dort gespeichert und in Steuersignale für den Sichtanzeigeschirm umgewandelt werden.

Derartige Verfahren mit Lauflängencodierung eignen sich
insbesondere zur Übertragung von Aufzeichnungen über
Fernsprechleitungen, deren Bandbreite begrenzt ist, und
sie sind insbesondere dann von Vorteil, wenn die Zahl
der Wechsel der Bildpunktinformationen nicht allzu groß
ist, wenn also zum Beispiel rein grafische Aufzeichnungen
zu übertragen sind. Vielfach sind aber die grafischen
Aufzeichnungen mit Texten durchsetzt, so daß die zu übertragende und zu verarbeitende Informationsmenge erheblich
ansteigen kann. Das bedeutet bei einer vorgegebenen Übertragungsgeschwindigkeit bedeutend längere Übertragungszeiten und einen erhöhten Speicheraufwand.

Aufgabe der Erfindung ist es daher, ausgehend von dem
genannten Verfahren ein Verfahren zu schaffen, das gerade bei gemischtem Darstellungsinhalt von Aufzeichnungen
günstigere Übertragungszeiten bei erträglichem Speicheraufwand ermöglicht. Dieses Verfahren gemäß der Erfindung
ist dadurch gekennzeichnet, daß jedes alphanumerische
Zeichen insgesamt durch ein digitales, von den übrigen
Informationen unterscheidbares Codewort gekennzeichnet
und an entsprechender Stelle in die digitale Gesamtinformation über eine Aufzeichnung eingefügt wird und
daß derartige Codewörter nach der Übertragung zur Empfangsstelle unter Verwendung eines Zeichengenerators in lagegerechte Bildpunktinformationen umgewandelt werden.

Gemäß der Erfindung wird also zwischen einzelnen Bereichen mit reiner Grafik und einzelnen Bereichen mit
alphanumerischen Zeichen, insbesondere Text, unterschieden, und es werden für beide Darstellungsarten einer Aufzeichnung unterschiedliche Codierverfahren verwendet,
die für die jeweilige Darstellungsart die günstigsten Bedingungen liefert.

Die Umsetzung von alphanumerischen Zeichen in digitale Codewörter und deren bildliche Wiedergabe auf Sichtanzeigeschirmen in Verbindung mit einem Zeichengenerator zur Umsetzung in entsprechende Bildpunktinformationen ist an sich bekannt, doch nicht deren Mischung mit der bekannten Lauflängencodierung nach Bedarf, wie es der Darstellungsinhalt einer Aufzeichnung vorgibt. Vielmehr hat man ausgehend von einer Umsetzung von alphanumerischen Zeichen in digitale Codewörter mit einem Schreibstellenraster die zusätzliche Übertragung von Grafik in der Weise gelöst, daß die Rasterfelder der einzelnen Schreibstellen z.B. in je sechs Unterfelder aufgeteilt werden, deren Feldkombination ebenfalls durch ein digitales Codewort verschlüsselt wird, das auf der Empfangsseite durch den Zeichengenerator in Bildpunktinformationen umgewandelt wird. Die auf diese Weise erreichbare Auflösung ist aber verhältnismäßig gering und nicht mit der bei dem neuen Verfahren erzielbaren Auflösung vergleichbar.

Gemäß einer Weiterbildung der Erfindung wird zur Bildung der digitalen Gesamtinformation einer Aufzeichnung zunächst der grafische Teil der Aufzeichnung abgetastet und die dabei gewonnenen Bildpunktinformationen werden in digitale Informationen umgewandelt und gespeichert. Anschließend werden die alphanumerischen Zeichen, z.B. mit einer Tastatur, in die grafische Aufzeichnung eingefügt und die entsprechenden Codewörter erzeugt, die dann lagegerecht die bereits vorhandene Information ergänzen. Die Bildung der digitalen Gesamtinformation erfolgt also in zwei Schritten, indem zunächst die grafische Darstellung erfaßt und die so gewonnene digitale Teilinformation durch die lagegerecht eingeordneten alphanumerischen Zeichen ergänzt wird.

Die Lage der einzelnen alphanumerischen Zeichen und deren Zuordnung zueinander kann durch ein aus gleichartigen Rasterfeldern für die Zeichen bestehendes Raster vorgegeben sein, da sich so die lagegerechte Einordnung der entsprechenden Codewörter in die übrige Information am einfachsten durchführen läßt. Bei Verwendung verschiedener Raster können alphanumerische Zeichen auch versetzt gegeneinander angeordnet sein. Sind die Rasterfelder der einzelnen Raster verschieden groß, so sind auch alphanumerische Zeichen in verschiedenen Größen übertragbar.

Die ein Codewort kennzeichnende Information wird zweckmäßig jeweils der ersten anzusteuernden Bildpunktspalte des zugehörigen Rasterfeldes und dem ersten in diesem Rasterfeld anzusteuernden Bildpunkt zugeordnet. Ist die erste Zeile eines Rasterfeldes eine Zwischenraumzeile, so wird Zeit für die Ansteuerung des Zeichengenerators bei der Wiedergabe gewonnen.

Die zur Empfangsstelle übertragene digitale Gesamtinformation einer Aufzeichnung kann zunächst unverändert abgespeichert und erst bei Bedarf in lagegerechte Bildpunktinformationen umgewandelt werden. Auf diese Weise lassen sich bei verringertem Speicheraufwand die Informationen für mehrere Aufzeichnungen speichern, da der Speicherbedarf hierfür wesentlich geringer ist, als wenn die Umwandlung sofort vorgenommen würde und die Bildpunktinformationen in einem Bildpunktspeicher abgespeichert würden. Auch bei unveränderter Zwischenspeicherung der empfangenen Information ist es jedoch zweckmäßig, den Sichtanzeigeschirm über einen Bildpunktspeicher durch synchrone Abtastung zu steuern.

Eine besondere Ausbildung der Erfindung ist dadurch gekennzeichnet, daß zur Umwandlung der auf der Empfangsseite empfangenen und gegebenenfalls zwischengespeicherten Information einer Aufzeichnung in lagegerechte Bildpunktinformationen die Informationen zunächst einer Informationsüberwachungsschaltung zugeführt werden, die die zugeführten Informationen in folgende Teilinformationen aufspaltet:

Bildbeginn, Zeilenbeginn, ggf. mit Adresse der jeweiligen Zeile, Anzahl der Bildpunkte oder Lauflänge mit gleicher Bildpunktinformation und Art derselben sowie die Tatsache, daß ein alphanumerisches Zeichen vorliegt, und die Art desselben; daß mit jedem Zeilenbeginn ein Spaltenzähler zur Festlegung der einzelnen Bildpunktspalten in die Ausgangsstellung gebracht und ein Zeilenzähler auf die jeweils anzusteuernde Zeile eingestellt wird, daß abhängig von der jeweiligen Lauflänge der Spaltenzähler um eine entsprechende Zahl von Bildpunkte weitergeschaltet und die zugehörige Bildpunktinformation bereitgestellt wird, daß bei Vorliegen eines alphanumerischen Zeichens der Spaltenzähler jeweils um eine der Rasterbreite entsprechende Zahl von Bildpunkten weitergeschaltet wird und die Information über die Art des Zeichens sowie eine Information über die von diesem Zeichen belegten Spalten in einen Zwischenspeicher eingegeben wird, wobei im Falle einer durch einen Vergleicher festgestellten Übereinstimmung zwischen Spaltenzählerstand und gespeichertem Zählerstand für die eine Zeilenhöhe ausmachende Zahl von Zeilen die jeweils erforderliche Bildpunktinformation anhand der gespeicherten Information über die Art des Zeichens von einem Zeichengenerator abgeleitet wird.

Bei Verwendung verschiedener Raster für die alphanumerischen Zeichen mit unterschiedlicher Größe der Rasterfelder und/oder versetzter Anordnung der Raster sind entsprechend viele Zwischenspeicher vorzusehen, wobei die Zuordnung des zuständigen Zwischenspeichers vom Codewort für das jeweilige alphanumerische Zeichen abgeleitet werden kann.

Weitere Einzelheiten der Erfindung seien nachfolgend
anhand der Zeichnung näher erläutert. Im einzelnen
zeigen:

Fig. 1     eine Aufzeichnung mit gemischtem Darstellungsinhalt aus Text und Grafik zur Erläuterung des
           Verfahrens gemäß der Erfindung

Fig. 2     ein Beispiel für die Auflösung eines alphanumerischen Zeichens in einzelne, durch ein
           Rasterfeld vorgegebene Bildpunkte,

Fig. 3     die symbolische Darstellung einer Informationsfolge für die Übertragung in Anlehnung an
           Fig. 1    und

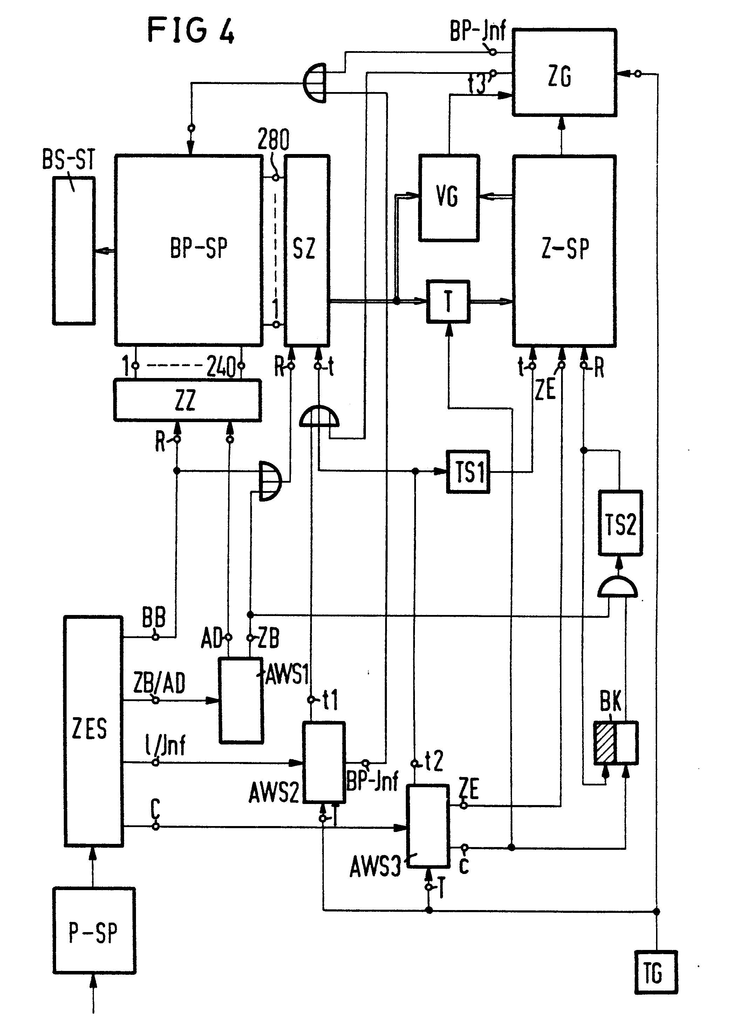

Fig. 4     ein Ausführungsbeispiel für die Umwandlung der
           übertragenen Informationen in lagegerechte Bild-
           punktinformationen zur Steuerung des Sichtan-
           zeigeschirmes in schematischer Darstellung.

Fig. 1  zeigt eine in Spalten SP  und Zeilen Z  unterteilte Aufzeichnung mit unterschiedlichem Darstellungsinhalt, nämlich einen in sich geschlossenen Kurvenzug
und Text. Die Schnittpunkte der einzelnen Zeilen Z1  bis
Zy  mit den einzelnen Spalten Sp1  bis Spx  bilden in
herkömmlicher Weise die einzelnen Bildpunkte, z.B. BPh/1,
und damit das Abtastraster. Bei der der Grafikübertragung zugrundeliegenden Lauflängencodierung werden jeweils die in einer Zeile aufeinanderfolgenden Bildpunkte
gleicher Bildpunktinformation gezählt und dieser Zahlenwert zusammen mit der zugehörigen Bildpunktinformation,

0006131

z.B. Schwarz oder Weiß, übertragen. Für die Zeile Zh
sind das beispielsweise die Angaben 11/Weiß - 12/Schwarz -
13/Weiß - 14/Schwarz - 15/Weiß.

Alphanumerische Zeichen werden dagegen anders codiert,
indem die Anzeigefläche in einzelne Schreibstellen oder
Rasterfelder aufgeteilt und das ihnen zugeordnete Zeichen
durch ein entsprechendes Codewort, z.B. C1 bis C5 der
Zeile Zm, gekennzeichnet wird.

Ein solches Rasterfeld ist in Fig. 2 dargestellt. Das
setzt sich z.B. in bekannter Weise aus zehn Zeilen und
sechs Spalten mit insgesamt 60 Bildpunkten BP 0/0 bis
BP 9/5 zusammen. Die Zeile Z0 ist eine Zwischenraumzeile, die Zeilen Z1 bis Z7 bilden die eigentlichen
Nutzzeilen, und die Zeilen Z8 und Z9 werden für Unterlängen genutzt. Das zugehörige Codewort zur Kennzeichnung
des jeweiligen alphanumerischen Zeichens wird zweckmäßig
dem Bildpunkt BP0/0 zugeordnet. Es kann aber auch den
Bildpunkten 0/1, 1/0 oder 1/1 zugeordnet sein. Alle
übrigen Bildpunkte können ohne Zuordnung einer Information bleiben.

Zeilenbereiche unmittelbar vor oder nach einer oder
mehreren aufeinanderfolgenden Schreibstellen für alphanumerische Zeichen werden durch die Lauflängencodierung
erfaßt, z.B. in Zeile Zm durch die Angaben 11 und 12,
und zwar in allen Zeilen gesondert, die durch eine Schreibstelle abgedeckt werden.

Fig. 3 zeigt in Anlehnung an Fig. 1 eine symbolische
Informationsfolge mit folgender Bedeutung der einzelnen
Abkürzungen:
BB - Bildbeginn
ZB - Zeilenbeginn, ggf. mit Zeilenadresse zum Beispiel
     Zh

l... - Lauflängenangaben oder Anzahl der in einer Zeile jeweils aufeinanderfolgenden Bildpunkte mit gleicher Bildpunktinformation Jnf

C... - Codewörter für alphanumerische Zeichen.

Die Bildpunktinformation kann sich z.B. auf die Angaben Schwarz oder Weiß oder auf die jeweils gewünschte Farbe sowie auf weitere Angaben wie z.B. Blinken,beziehen. In gleicher Weise können die Codewörter C.... ergänzt sein, wenn z.B. die Darstellung in unterschiedlichen Farben erfolgen soll.

Durch die Verwendung von vorgegebenen Rasterfeldern für die einzelnen alphanumerischen Zeichen und die Zuordnung der Codewörter zu bestimmten Bildpunkten lassen sich diese sehr einfach in die bei der Abtastung der grafischen Darstellung gewonnene Teilinformation lagegerecht einordnen. Bei einem vorgegebenen Schreibstellenraster können die einzelnen alphanumerischen Zeichen nur in derselben Größe wiedergegeben und nicht gegeneinander verschoben werden. Dies läßt sich aber durch zusätzliche Raster ermöglichen, wobei eine zusätzliche Information über das zugrundeliegende Raster bei jedem Codewort C.... erforderlich wird.

Fig. 4 zeigt ein Ausführungsbeispiel in schematischer Darstellung für die Umwandlung der digitalen Information auf der Empfangsseite in den einzelnen Bildpunkten entsprechende Informationen.

Die über die Leitung L eintreffende Information wird zunächst von einem Pufferspeicher PSP aufgenommen und dann an einen nicht dargestellten Dauerspeicher oder aber zur direkten Umwandlung an die Zeichenerkennungsschaltung ZES weitergeleitet. Diese Zeichenerkennungsschaltung überwacht die einlaufende Information auf die einzelnen, für die Wiedergabesteuerung wichtigen Informationsteile. So werden am Ausgang BB ein Bildbeginn, am Ausgang ZB/AD ein Zeilenbeginn und gegebenenfalls die Adresse dieser Zeile, am Ausgang 1/Inf das Vorliegen einer Lauflängencodierung mit Eingabe der Lauflänge oder Bildpunktzahl und der Art der Bildpunktinformation sowie am Ausgang C das Vorliegen eines alphanumerischen Zeichens und die Art dieses Zeichens markiert.

Des weiteren ist ein Bildpunktspeicher BP-SP mit einem Zeilenzähler ZZ für die Auswahl der einzelnen Zeilen und einem Spaltenzähler SZ für die Auwahl der einzelnen Spalten gezeigt, so daß jeder Bildpunkt nacheinander angesteuert werden kann. Der Bildpunktspeicher BP-SP speichert in an sich bekannter Weise für jeden Bildpunkt die zugehörige Bildpunktinformation für die Aussteuerung eines nicht dargestellten Sichtanzeigeschirmes in Verbindung mit der Steuerung BS-ST. Bei einer einfachen Hell- oder Dunkelsteuerung genügt ein Bit je Bildpunkt. Bei Farbesteuerung sind zur Festlegung der Farbe mehrere Bits, die zweckmäßig in getrennten Speicherebenen angeordnet sind, erforderlich. Analoges gilt für zusätzliche Funktionen, z.B. Blinken.

Die Ansteuerung der einzelnen Bildpunkte im Speicher BP-SP erfolgt bekanntlich in der Weise, daß mit Bildbeginn - Signalimpuls am Ausgang BB der Zeichenerkennungsschaltung ZES - Zeilen- und Spaltenzähler ZZ und SZ über den Steuereingang R in ihre Ausgangsstellung, z.B. die Stellung 1, gebracht werden. Nach jeder Zeileneinstellung wird der Spaltenzähler SZ bis zum Ende zyklisch fortgeschaltet. Am Ende einer jeden Zeile wird dann auf die nächstfolgende Zeile umgeschaltet und ein erneuter Zählzyklus des Spaltenzählers SZ eingeleitet. Die Fortschaltung des Zeilenzählers ZZ kann direkt durch das Zeichen Zeilenbeginn ZB oder aber - wie im

V8P 6 1 0 8 EUR

vorliegenden Fall - durch die zugehörige Zeilenadresse
bewirkt werden.

Beide Kriterien können direkt am Ausgang der Zeichenerkennungsschaltung ZES abgegriffen werden. Wird nur eine
den Zeilenbeginn kennzeichnende Adresse übermittelt, so
kann mittels der Auswahlschaltung AWS1 das Zeilenbeginnzeichen ZB von der Adresse abgeleitet werden.

Bei einer Lauflängencodierung erfolgt die Steuerung des
Spaltenzählers SZ über eine Auswerteschaltung AWS2
am Ausgang 1/Inf der Zeichenerkennungsschaltung ZES,
die von einem zentralen Taktgeber T getaktet wird.
Diese Auswerteschaltung AWS2 arbeitet in der Weise,
daß jeweils eine der Lauflänge l oder der Bildpunktzahl
entsprechende Anzahl von Taktimpulsen am Ausgang t1
abgegeben wird, durch die der Spaltenzähler SZ weitergeschaltet wird. Mit jedem Taktimpuls wird dabei die
zugehörige Bildpunktinformation BP-Inf in den Speicher
BP-SP eingeschrieben.

Alle weiteren Teile der Anordnung gemäß Fig. 4 sind
gemäß der Erfindung durch die zusätzliche Übertragung
von alphanumerischen Zeichen bedingt. Zu diesem Zweck
ist der Ausgang C der Zeichenerkennungsschaltung ZES
mit einer weiteren Auswerteschaltung AWS3 gekoppelt,
die ebenfalls durch den zentralen Taktgeber TG getaktet
wird und folgende Signale liefert:
Am Ausgang t2 eine der Rasterfeldbreite entsprechende
Zahl von Spaltentaktimpulsen, z.B. sieben, zur Fortschaltung des Spaltenzählers SZ, am Ausgang c ein
Signal für das Vorliegen eines alphanumerischen Zeichens
und am Ausgang ZE eine Angabe zur Bestimmung des jeweiligen Zeichens.

Diese Auswerteschaltung AWS3 arbeitet mit einem Zwischenspeicher Z-SP und einem Zeichengenerator ZG zusammen,
der in an sich bekannter Weise anhand der jeweils zugeführten Information ZE zur Bestimmung des jeweiligen
Zeichens die Bildpunktinformation BP-Inf für die Wiedergabe des ausgewählten Zeichens liefert.

Beim Ansprechen der Auswerteschaltung AWS3 wird zunächst -
bei angenommener Voreinstellung des Spaltenzählers SZ
auf die jeweils nächste Spalte - über den Ausgang c die
Torschaltung T aufgesteuert und der augenblickliche
Zählerstand des Spaltenzählers SZ in den Zwischenspeicher
Z - SP übernommen und so die erste Rasterfeldspalte eines
Zeichens markiert. Weiterhin wird die Angabe ZE über das
jeweilige Zeichen an den Zwischenspeicher Z-SP übergeben.
Anschließend wird durch die am Ausgang t2 der Auswerteschaltung AWS3 auftretenden Taktimpulse der Spaltenzähler
SZ um eine vorgegebene Spaltenzahl weitergeschaltet.
Bei der gemäß Fig. 2 gewählten Rasterfeldbreite sind
das sieben Schritte, so daß sich ein neues Zeichen oder
aber eine Lauflängencodierung anschließen kann. Der
Zwischenspeicher Z-SP wird daher mit dem jeweils letzten
Taktimpuls einer solchen Folge auf den Speicherbereich
für das nächste alphanumerische Zeichen umgeschaltet,
was über eine entsprechende Teilerschaltung TS1 und den
Eingang t am Zwischenspeicher Z-SP gesteuert wird.

Folgen in derselben Zeile weitere Zeichen, so werden
diese in gleicher Weise zusammen mit dem jeweiligen
Zählerstand des Spaltenzählers SZ in den Zwischenspeicher
Z-SP übernommen und der Spaltenzähler weitergeschaltet,
bis die Zeile zu Ende ist oder eine Lauflängencodierung
folgt. Bei jedem ersten Zeichen einer Zeile wird zusätzlich über den Ausgang c der Auswerteschaltung AWS3
eine bistabile Kippstufe BK gesetzt, die jeweils solange
gesetzt bleibt, bis alle Zeilen eines Zeichenrasterfeldes

0006131

angesteuert sind. Dies wird durch eine zweite Teilerschaltung TS2 überwacht, die nach Setzen der bistabilen
Kippstufe BK über ein Gatter G durch das Zeilenbeginnsignal ZB der Auswerteschaltung AWS1 ansteuerbar ist.
Nach Durchlaufen der letzten Zeile eines Rasterfeldes,
z.B. gemäß Fig. 2 der zehnten Zeile, wird der Zwischenspeicher Z-SP über den Eingang R wieder gelöscht.

Eine derartige Steuerung ergibt sich aus der Verwendung
eines starren Rasterfeldes für die Lagezuordnung der
einzelnen alphanumerischen Zeichen. Sollen Zeichen in
gegeneinander versetzter Anordnung oder in unterschiedlicher Größe dargestellt werden, so ist für jedes wählbare Raster ein gesonderter Zwischenspeicher Z-SP mit
eigener Ansteuerung gegebenenfalls einem zusätzlichen
Zeichengenerator erforderlich. Die Auswahl der einzelnen
Zwischenspeicher kann dabei anhand einer zusätzlichen,
das jeweils gewählte Raster kennzeichnendenInformation
getroffen werden.

Mit der auf die Einspeicherung von Zeichen in den Zwischenspeicher Z-SP folgenden nächsten Zeile werden nun
die einzelnen Zählerstände des Spaltenzählers mit den
im Zwischenspeicher Z-SP abgespeicherten Zählerständen
durch den Vergleicher VG verglichen. Ergibt sich Übereinstimmung, so wird der Zeichengenerator ZG angelassen
und die im Zwischenspeicher Z-SP abgespeicherte Zeicheninformation ZE an den Zeichengenerator ZG übergeben,
der in an sich bekannter Weise die für den gerade angesteuerten Bildpunkt erforderliche Bildpunktinformation
BP-Inf liefert. Mit den vom zentralen Taktgeber TG gelieferten Taktimpulsen wird dann ein nicht gezeigter
Zähler des Zeichengenerators für die in einer Zeile aufeinanderfolgenden Bildpunktinformationen eines Zeichens
weitergeschaltet, bis die letzte Spalte eines Rasterfeldes

0006131

erreicht ist und der Zähler in die Ausgangslage zurückkehrt. Die den nicht dargestellten Zähler des Zeichengenerators ZG steuernden Taktimpulse schalten während
dieser Zeit auch den Spaltenzähler synchron weiter. Die
Auswahl der einzelnen Zeilen eines Rasterfeldes im Zeichengenerator kann in analoger Weise durch einen weiteren nicht dargestellten Zähler erfolgen. Diese Funktion
kann aber auch von der Teilerschaltung TS2 - wie angedeutet - übernommen werden.

Die für die Aufzeichnung von alphanumerischen Zeichen
erforderlichen Bildpunktinformationen im Bildpunktspeicher
BP-SP werden also zeitgerecht während eines Ansteuerdurchlaufes für die einzelnen Bildpunkte des Bildpunktspeichers vom Zeichengenerator zur Verfügung gestellt,
so daß trotz abwechselnder Steuerinformation durch
Längencodierung für Grafik und Codewortumsetzung für
alphanumerische Zeichen mit einem Durchlauf ein entsprechendes Abbild im Bildpunktspeicher BP-SP erzeugt
werden kann.

4 Figuren
13 Patentansprüche

Patentansprüche
--------------------------------

1. Verfahren zur Übertragung von Aufzeichnungen mit gemischtem Darstellungsinhalt, z.B. Grafik und Text, auf einen aus einzelnen Bildpunkten zusammengesetzten Sichtanzeigeschirm, z.B. Kathodenstrahlröhre, wobei die Bildpunkte Zeile für Zeile angesteuert und entsprechend der abzubildenden Aufzeichnung ausgesteuert werden, so daß ein stehendes Bild entsteht, wobei die durch Abtastung der Aufzeichnung nach demselben Muster gewonnenen Bildpunktinformationen in der Weise zusammengefaßt werden, daß die Bildpunkte jeder Zeile in Gruppen aufeinanderfolgender Bildpunkte gleichen Informationsinhaltes, z.B. Hell oder Dunkel, unterteilt und je Zeile Informationen über die Größe der aufeinanderfolgenden Gruppen sowie über den zugehörigen Informationsinhalt in digitaler Form gebildet werden, die als solche direkt oder nach Zwischenspeicherung zur Empfangsstelle übertragen, dort gespeichert und in Steuersignale für den Sichtanzeigeschirm umgewandelt werden, d a d u r c h   g e k e n n z e i c h n e t , daß jedes alphanumerische Zeichen insgesamt durch ein digitales, von den übrigen Informationen unterscheidbares Codewort (C...) gekennzeichnet und an entsprechender Stelle in die digitale Gesamtinformation über eine Aufzeichnung eingefügt wird und daß derartige Codewörter (C...) nach der Übertragung zur Empfangsstelle unter Verwendung eines Zeichengenerators (ZG) in lagegerechte Bildpunktinformationen (BP-Inf) umgewandelt werden.

2. Verfahren nach Anspruch 1, d a d u r c h   g e k e n n z e i c h n e t , daß zur Bildung der digitalen Gesamtinformation einer Aufzeichnung zunächst der grafische Teil der Aufzeichnung abgetastet und die dabei gewonnenen

0006131

VP7 P 6108 EUR

Bildpunktinformationen in digitale Informationen umgewandelt und gespeichert werden und daß anschließend die alphanumerischen Zeichen in die grafische Aufzeichnung eingefügt und die entsprechenden Codewörter (C...1) erzeugt werden, die dann lagegerecht die bereits vorhandene Information ergänzen.

3. Verfahren nach Anspruch 1 oder 2, d a d u r ch g e k e n n z e i c h n e t , daß die Lage der einzelnen alphanumerischen Zeichen durch ein aus gleichartigen Rasterfeldern bestehendes Raster vorgegeben ist.

4. Verfahren nach Anspruch 1 oder 2, d a d u r c h g e k e n n z e i c h n e t , daß die Lage der einzelnen alphanumerischen Zeichen durch verschiedene, jeweils aus gleichartigen Rasterfeldern bestehende Raster vorgegeben ist.

5. Verfahren nach Anspruch 4, d a d u r c h g e k e n n - zeichnet, daß die Raster gegeneinander verschoben angeordnet sind.

6. Verfahren nach Anspruch 4, d a d u r c h g e k e n n - z e i c h n e t , daß die Rasterfelder der einzelnen Raster unterschiedlich groß sind.

7. Verfahren nach einem der Ansprüche 3 bis 6, d a - d u r c h g e k e n n z e i c h n e t , daß die ein Codewort (C..) kennzeichnende Information jeweils der ersten anzusteuernden Bildpunktspalte des zugehörigen Rasterfeldes und dem ersten in diesem Rasterfeld anzusteuernden Bildpunkt zugeordnet ist.

8. Verfahren nach Anspruch 7, d a d u r c h g e - k e n n z e i c h n e t , daß die erste Zeile eines Rasterfeldes eine Zwischenzeile ist.

9. Verfahren nach einem der Ansprüche 1 bis 8, d a - d u r c h   g e k e n n z e i c h n e t , daß die an der Empfangsstelle empfangene Gesamtinformation einer oder mehrerer Aufzeichnungen zunächst unverändert abgespeichert und erst bei Abruf zur Darstellung auf dem Sichtanzeigeschirm in lagegerechte Bildpunktinformationen umgewandelt wird.

10. Verfahren nach einem der Ansprüche 1 bis 9, d a - d u r c h   g e k e n n z e i c h n e t , daß die an der Empfangsstelle aus der empfangenen Gesamtinformation einer Aufzeichnung gewonnenen lagegerechten Bildpunktinformationen in einem Bildpunktspeicher (BP-SP) als latentes Speicherbild gespeichert werden und daß der Bildpunktspeicher durch synchrone Abtastung die Wiedergabe auf dem Sichtanzeigeschirm steuert.

11. Verfahren nach einem der Ansprüche 1 bis 10, d a d u r c h   g e k e n n z e i c h n e t , daß zur Umwandlung der auf der Empfangsseite empfangenen und gegebenenfalls zwischengespeicherten Information einer Aufzeichnung in lagegerechte Bildpunktinformationen (BP-Inf) die Informationen zunächst einer Zeichenerkennungsschaltung (ZES) zugeführt werden, die die zugeführte Information in folgende Teilinformationen aufspaltet: Bildbeginn (BB), Zeilenbeginn (ZB) gegebenenfalls mit Adresse der Zeile, Anzahl der Bildpunkte oder Lauflänge (1) mit gleicher Bildpunktinformation und Art derselben sowie das Vorliegen eines alphanumerischen Zeichens und die Art desselben, daß mit jedem Zeilenbeginn ein Spaltenzähler (SZ) zur Festlegung der einzelnen Bildpunktspalten in die Ausgangsstellung gebracht und ein Zeilenzähler (ZZ) auf die jeweils anzusteuernde Zeile eingestellt wird, daß abhängig von der jeweiligen Lauflänge der Spaltenzähler (SZ) um eine entsprechende Zahl von Bildpunkten weitergeschaltet und die zugehörige Bildpunktinformation bereitgestellt wird, daß bei Vorliegen eines alphanumerischen Zeichens der Spaltenzähler (SZ) jeweils
um eine der Rasterfeldbreite entsprechende Zahl (z.B. 7)
von Bildpunkten weitergeschaltet wird und die Information über die Art des Zeichens (ZE) sowie eine Information über die von diesem Zeichen belegte Spalte in
einen Zwischenspeicher (Z-SP) eingegeben wird, wobei
im Falle einer durch einen Vergleicher (VG) festgestellten Übereinstimmung zwischen Spaltenzählerstand
und eingespeichertem Zählerstand für die eine Zeichenhöhe ausmachende Zahl (z.B. 10) von Zeilen die jeweils
erforderliche Bildpunktinformation anhand der gespeicherten Information (ZE) über die Art des Zeichens
von einem Zeichengenerator (ZG) abgeleitet wird.

12. Verfahren nach Anspruch 11, d a d u r c h   g e -
k e n n z e i c h n e t , daß der Vergleicher (VG)
für die Überwachung der Bildpunktspalten zum Aufzeichnen
eines alphanumerischen Zeichens erst nach Ansteuerung
der nach Übernahme der zugehörigen Informationen in
den Zwischenspeicher(Z-SP) beginnenden nächsten Zeile
erfolgt.

13. Verfahren nach Anspruch 11 oder 12, d a d u r c h
g e k e n n z e i c h n e t , daß bei mehreren Rastern
für die Lagebestimmung der alphanumerischen Zeichen entsprechend viele Zwischenspeicher vorgesehen sind und
die Auswahl des jeweils zugehörigen Zwischenspeichers
vom Codewort für das jeweilige alphanumerische Zeichen
abgeleitet wird.

FIG 1

FIG 2

FIG 3

$$BB \underline{\underline{\quad-\quad}}$$

$$ZB / Zh - l1/Jnf - l2/Jnf - l3/Jnf - l4/Jnf - l5/Jnf$$
$$\underline{\underline{\quad\quad}}$$

$$ZB / Zm - l1/Jnf - C1 - C2 - C3 - C4 - l2/Jnf - l3/Jnf -$$
$$l4/Jnf - l5/Jnf - l6/Jnf -$$

$$ZB / Zm+1 - l1/Jnf - l2/Jnf - l3/Jnf - l4/Jnf - l5/Jnf -$$
$$l6/Jnf$$
$$\underline{\underline{\quad\quad}}$$

FIG 4

0006131

2/2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>FR - A - 2 308 262</u> (SIEMENS)<br>* Seite 1, Zeile 31 bis Seite 2, Zeile 1 *<br><br>-- | 1 |
| | <u>GB - A - 1 486 615</u> (IBM)<br>* Seite 4, Zeile 36 bis Seite 5, Zeile 4; Seite 5, Zeile 63 bis Seite 6, Zeile 12 *<br><br>-- | 1,2,7-11 |
| | <u>US - A - 4 091 424</u> (WINDERGREN)<br>* Spalte 2, Zeile 47 bis Spalte 3, Zeile 23; Spalte 11, Zeile 12 bis Spalte 12, Zeile 44 *<br><br>-- | 1,7,9-11 |
| | <u>US - A - 3 911 420</u> (LAMPSON)<br>* Spalte 1, Zeilen 30-50; Spalte 3, Zeile 34 bis Spalte 8, Zeile 2; Spalte 19, Zeilen 34-50 *<br><br>-- | 1-4,6,7,9,11,13 |
| | <u>DE - A - 2 703 021</u> (NATIONAL RESEARCH DEVELOPMENT)<br>* Seite 15, Zeile 1 bis Seite 18, Zeile 16 *<br><br>-- | 4,6,9,11,13 |
| | <u>DE - A - 2 724 199</u> (RAYTHEON)<br>* Seite 22, Zeile 17 bis Seite 23, Zeile 20 *<br><br>-- | 10 |
| | IBM TECHNICAL DISCLOSURE BULLETIN, Vol. 17, Nr. 3, August 1974,<br>./. | 8,12 |

**KLASSIFIKATION DER ANMELDUNG (Int.Cl.3)**

H 04 N 1/00
G 06 F 3/14

**RECHERCHIERTE SACHGEBIETE (Int. Cl.²)**

H 04 N 1/00
G 06 F 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-09-1979 | DE ROECK |

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | New York, US, R.R. SCHOMBURG et al.: "Raster display with half-index", Seiten 682-683<br><br>* Seite 683, Zeilen 1-13 *<br><br>---- | |

**KLASSIFIKATION DER ANMELDUNG (Int.Cl.²)**

**RECHERCHIERTE SACHGEBIETE (Int. Cl.²)**

EPA Form 1503.2   06.78